# EUROPEAN PATENT APPLICATION

(11) **EP 4 545 411 A1**
(43) Date of publication of application: **30.04.2025**
(21) Application number: 23205796.8
(22) Date of filing: 25.10.2023
(51) Int. Cl.: B64D 11/02

(54) **METHOD OF INSTALLING A MODULAR WATER SYSTEM IN AN AIRCRAFT SECTION, AND AIRCRAFT SECTION AS WELL AS AIRCRAFT COMPRISING SUCH WATER SYSTEM**

(71) Applicant: Airbus Operations GmbH, 21129 Hamburg (DE)
(72) Inventor: Albers, Frederik, 21129 Hamburg (DE)

(57) **Abstract**

The present disclosure relates to a method of installing a modular water system in an aircraft (1), including installing a water backbone assembly (100) extending over a length of an aircraft section (10) and connecting a pump (155) with a standard water consumer (90). The water backbone assembly (100) comprises at least one backbone conduit (105) and can be provided with connection fittings (110, 112, 114), in order to fluidly connect one or more branch conduits (120, 122, 125) to the backbone conduit (105). Further disclosed are an aircraft section (10) and an aircraft (1) having such water system installed therein.

## Description

The present disclosure generally relates to a method for installing a water system in an aircraft section, an associated aircraft section and an aircraft including such water system. Particularly, the present disclosure relates to a method for installing a modular water system in an aircraft section including installing a backbone conduit and a first and second connection fitting, wherein the first connection fitting is fluidly connected to a main pump and the second connection fitting is fluidly connected to a standard water consumer.

A conventional aircraft is equipped with a water system that is particularly designed for the type of the aircraft and the customer operating the aircraft. Specifically, the customer specifies the number and location of water consuming monuments, such as lavatories, galleys, humidifiers, and the like, in the aircraft. Based on this information the water system is designed, customised and prefabricated. The resulting water system is then subject to a certification process, for example, by one or more aviation associations. Thus, a water system and an aircraft require a lot of effort, particularly, if changes to the water system are made, including layout changes of the monuments and their location in the cabin of the aircraft.

These customised (specially designed and certified) water systems require a huge number of components to be provided and stored. For instance, customised pipes or hose assemblies, installation devices, etc. are to be held available, in order to perform maintenance and/or replacement of portions of the water system.

It is therefore an object of the present disclosure to provide an improved water system, and particularly providing a method for installing a water system in an easier manner.

This object is solved by the present invention as defined in the independent claims. Preferred embodiments are defined by the dependent claims.

According to a first aspect to better understand the present disclosure, a method for installing a water system in an aircraft section is described. The aircraft section is a longitudinally extending portion of the aircraft fuselage configured to form a passenger cabin of the aircraft. The aircraft fuselage portion is meant to form the part of the aircraft including the passenger cabin, where the water consumers will be installed.

The method comprises installing, in the aircraft section, a water backbone assembly extending from a first longitudinal end to a second, opposite longitudinal end of the aircraft section. The water backbone assembly comprises at least a backbone conduit, a first connection fitting at the first end of the aircraft section and a second connection fitting at the second end of the aircraft section. The method further comprises fluidly connecting a main pump to the first connection fitting, the main pump being configured to convey water from a main tank through the backbone conduit. Thus, water can be conveyed through the backbone conduit along the entire length (longitudinal extension) of the aircraft section from the pump (and/or tank) to one of the longitudinal ends of the aircraft section.

The method further comprises fluidly connecting a standard water consumer to the second connection fitting. The standard water consumer has a predefined location in the aircraft section and is a water consumer that will be installed in each aircraft (of the type, for which the aircraft section is intended), but independent from the customer operating the aircraft. As a mere example, such standard water consumer can be a monument (e.g., a lavatory or galley) installed directly behind a cockpit. Such monuments are usually installed in each aircraft in order to provide space for flight attendants during embarking and disembarking of passengers as well as having an optimal working space during the flight.

Thus, the backbone conduit will be installed in the aircraft section between two fixed points of the water system, i.e. the main pump and a standard water consumer. The location of the main pump in the aircraft section can then be chosen based on the location of the standard water consumer. As a mere example, a possible location of the main pump is at a longitudinal end of the aircraft section being farthest from the standard water consumer. It is quite likely that, as indicated above, a standard water consumer will be located at a front end and/or back end (in a longitudinal direction) of the aircraft section. The backbone conduit can then extend over the entire length of the aircraft section forming the passenger cabin. Likewise, a possible location of the main pump (as well as the main water tank) can be a central position of the aircraft along the longitudinal direction of the aircraft. The aircraft section may then extend in an aft or front direction. Likewise, at least two water backbone assemblies can be installed in the aircraft, one towards the aft end of the aircraft and one towards the front end of the aircraft.

It is to be understood that more than one standard water consumer may be present in the aircraft section. In this case, the main pump can be installed anywhere between the standard water consumers (in a longitudinal direction of the aircraft section, and provided that the standard water consumers are not adjacent to one another at a same longitudinal position in the aircraft section). In the present disclosure reference is made to a main pump and a main tank. Both components are considered as a starting point of water supply in the water system. Thus, both terms may be used interchangeably as the beginning of water supply in the water system. Particularly, since the main pump can be integrated into the main tank or may be provided in close proximity to the main tank, both components form a location, where the water supply of the water system starts.

Therefore, a flexible water system can be installed in the aircraft section, particularly the part of the aircraft including the passenger cabin, where one or more water consumers are most likely to be installed. Due to the backbone conduit extending over the most significant part of the aircraft, a source of water is present anywhere along the backbone conduit. This allows flexible zones in the passenger cabin for installing a water consumer anywhere along the longitudinal direction of the aircraft section, even after final assembly of the aircraft, so that customisable layouts of the passenger cabin also with respect to water consumers are possible. In addition, in case the layout of the passenger cabin with respect to water consumers will be changed, the flexible water system of the present disclosure allows adaptation of the water system.

It is to be understood that the standard water consumer can also be arranged in the cockpit. Alternatively, a secondary water consumer, such as a humidifier, can be arranged in the cockpit, which may be connected to the backbone conduit via a branch conduit. Thus, the aircraft section is not restricted to the passenger cabin, but may also include the cockpit.

In an implementation variant, the method can further comprise installing a third connection fitting to the backbone conduit anywhere between the first and the second connection fitting, and closing an end of the third connection fitting which forms the beginning of a branch from the backbone conduit. The third connection fitting, hence, forms an opening in the backbone conduit and provides a source of water from the water system. By closing the end of the third connection fitting, i.e. closing the opening in the backbone conduit, a branch of the water system can be installed at any later time. Thus, the water system can be pre-configured for an additional water consumer to be installed later, and which can easily be connected to the existing water system. Closing the end of the third connection fitting further avoids any (long, and hygienically relevant) dead end in the water system and, hence, avoids hygienic issues by such dead ends or dead stub branches (due to non-moving water). In other words, the third connection fitting is designed in such a manner that stagnant water is omitted despite a short dead end.

In a further implementation variant, the third connection fitting can be a T-fitting. Closing the end of the third connection can then comprise closing the end with a plug. A T-fitting provides for a very short section branching from the backbone conduit, so that no hygienic issues will occur. In addition, a T-fitting can be inserted into the backbone conduit in an easy manner and with very low impact on the flow of water through the backbone conduit (and through a portion of the T-fitting).

Alternatively, the third connection fitting can be a Y-fitting, i.e., a fitting similar to a T-fitting but having an angle between at least two branches of the fitting that is not 90°.

In another implementation variant, the third connection fitting can comprise a passageway that can be integrated into the backbone and a valve configured to open and close a branch fluidly connected to the passageway. As a mere example, the passageway can be part of a valve, such as a three-way valve, wherein two ends of the valve are always "open", hence, forming the passageway. Likewise, the passageway can be formed by a short piece of conduit to which a valve is mounted in a fluid tight manner. In any case, the valve functions in the same manner as a plug inserted into a T- or Y-fitting branch, but can be selectively opened and closed. This allows branching water from the backbone conduit on a controlled basis.

In an implementation variant, the method can further comprise installing, in the aircraft section, a branch conduit from the third connection fitting to a further water consumer in the aircraft section. This installation step can take place at any time, including during final assembly of the aircraft, if the further water consumer location is already known, and any time after final assembly of the aircraft, such as during a redesign or customisation of the aircraft. For instance, the branch conduit may be installed to retrofit the aircraft or in case of refurbishment of the aircraft section, i.e. any time after final assembly of the aircraft. Furthermore, the branch conduit can be installed on demand, i.e. only in case a monument is installed. Alternatively, the branch conduit can be pre-installed in the aircraft section (e.g., before final assembly of the aircraft), i.e. for each aircraft of the present type, and the branch conduit is used for a monument, only if it is installed at a later time. If there is no monument to be installed, the branch conduit can be remain unused and not connected to the backbone conduit.

In another implementation variant, the method can further comprise installing a straight connection fitting to the backbone conduit anywhere between the first and the second connection fitting. Thus, the backbone conduit is simply divided into two portions that are connected to one another with the straight connection fitting (or simply straight fitting). This allows (particularly at a later time, when access to the backbone conduit is required) to continue the method with removing the straight connection fitting before installing the third connection fitting. The subsequent method steps involving or requiring the third connection fitting may then be performed.

In a further implementation variant, fluidly connecting the standard water consumer comprises extending the backbone conduit to the standard water consumer or installing a standard water consumer conduit from the backbone conduit to the standard water consumer. In other words, the conduit of the backbone conduit (i.e., the pipe or hose) can be installed from anywhere in the aircraft section (including from the main pump) up to the standard water consumer, which may lie on a different vertical level in the aircraft section. Otherwise, the backbone conduit is installed on one vertical level of the aircraft section, and a standard water consumer conduit is fluidly coupled to the backbone conduit and extends to the standard water consumer. Such coupling can be achieved by a straight fitting, i.e. a fitting having only an inlet and an outlet, in order to connect to pipes or hoses.

As a mere example, the backbone assembly or at least the backbone conduit can be installed underneath a cabin floor, such as in a triangle area or cargo area of the aircraft section. The water consumers are usually installed in the passenger cabin above the cabin floor. Nevertheless, there are aircraft configurations, which comprise water consumers, such as lavatories or food preparation devices, in a lower deck, such as the cargo deck. These water consumers may be directly connected to the backbone conduit or through the third connection fitting with or without a branch conduit.

In yet a further implementation variant, the method can further comprise installing a water consumer interface to the backbone conduit, wherein the water consumer interface comprises an inlet fluidly connected to the backbone conduit, and a plurality of outlets. In other words, in its most simple form the water consumer interface may be a T-fitting or Y-fitting, and in more complex forms a fork-like component having a plurality of water outlets. The water consumer interface allows distributing water from the backbone conduit to one or more water consumers.

In an implementation variant, one of the plurality of outlets of the water consumer interface is connected to the backbone conduit downstream of the backbone conduit connected to the inlet, and one of the plurality of outlets is configured to be connected to a branch conduit. In other words, the inlet and an outlet connect the backbone conduit upstream and downstream of the water consumer interface. Thus, they form a passageway through the water consumer interface. At the same time, one or more further outlets allow connecting a branch conduit to achieve a fluid communication with the backbone conduit. The water consumer interface can be installed at any location along the backbone conduit and facilitates connecting a water consumer any time at or after final assembly of the aircraft section. In case of more than two outlets, a plurality of water consumers can be supplied with water from the backbone conduit.

In another implementation variant, installing the water backbone assembly can comprise installing the backbone conduit with a length excessing a length of the aircraft section between the first and second connection fitting. If the flexibility of the backbone conduit allows, the excess length of the backbone conduit is rolled up, such as being rolled up to a conduit spiral. Otherwise, it can simply be fixed to the aircraft section until required. This allows installing the backbone conduit, for example, at the time of final assembly of the aircraft section having a reserve length. As a mere example, a (standard) water consumer may be installed at a later time and at a location in the aircraft section not yet covered by the backbone conduit, such as at a part of the aircraft section currently not covered by the backbone conduit between the first and second connecting fitting (e.g., in longitudinal direction).

Alternatively, the length of the backbone conduit equals the lengths of the aircraft section. Further alternatively, the length of the backbone conduit allows adaptation of its length, for example, in a trim-to-fit installation process. Also alternatively, the length of the backbone conduit is shorter than the length of the aircraft section, and during final assembly, the two (short) backbone conduits of two adjacent aircraft section are connected to one another by a special fitting and/or special connection line.

Alternatively or additionally, a tolerance compensation element can be installed somewhere in or at the backbone conduit. Such compensation element may compensate for tolerances regarding the lengths of the backbone conduit and/or an angle of the backbone conduit relative to a horizontal or vertical line, such as at one or both ends of the backbone conduit.

In yet another implementation variant, installing the water backbone assembly, fluidly connecting the standard water consumer, and/or installing the branch conduit comprises mounting a standard bracket to an aircraft structure of the aircraft section, the standard bracket being configured to receive and hold one or more of the backbone conduit, the standard water consumer conduit and the branch conduit. In other words, the standard bracket has one or more portions capable of receiving a conduit, such as the backbone conduit, the standard water consumer conduit or a branch conduit. As a mere example, the standard bracket may include a clip configured to have the respective conduit to be clipped thereto. In another form, the standard bracket may include a through hole or loop or the like, in/through which the conduit can be inserted and/or installed.

Thus, installing the water system in the aircraft section can be performed in the same manner as wiring the aircraft section. For instance, at least the backbone conduit can be installed in the aircraft section simultaneously with installing wires and cables in the aircraft section.

In a further implementation variant, the method can further comprise cutting the backbone conduit at a location in the aircraft section corresponding to a location of a water consumer to be installed, installing a third connection fitting or a water consumer interface to the cut backbone conduit, and installing, in the aircraft section, a branch conduit from the third connection fitting or the water consumer interface to the water consumer. Thus, the water system of the present disclosure allows installing a further water consumer at any time, even after final assembly of the aircraft section. For instance, the backbone conduit can be cut at a location allowing the best suitable installation space for the branch conduit, such as the shortest branch conduit between backbone conduit and further water consumer.

In a further implementation variant, the method can further comprise cutting the backbone conduit at a location where the backbone conduit is damaged, and repairing the damaged portion of the backbone conduit by replacing it with a suitable pipe or hose element and, for example, two connectors or fittings.

In yet a further implementation variant, installing the water backbone assembly can comprise installing at least one further water backbone assembly or further backbone conduit and/or installing at least one further main pump. On the one hand, this allows to provide redundancy for the water system. On the other hand, a backbone conduit may be provided on each lateral side of the aircraft section (when viewing along the longitudinal direction), and/or a backbone conduit may be provided on each longitudinal side of the aircraft section having the main pump therebetween (i.e., at a central position of the aircraft). This facilitates supplying water to each water consumer irrespective of its location inside of the aircraft section. Furthermore, a backbone conduit may be provided for each water consumer or spatially close group of water consumers (e.g., all water consumers in a monument).

In another implementation variant, installing the water backbone assembly can further comprise installing a plurality of main pumps. This can include installing one main pump for each backbone assembly/conduit. Thus, a redundant water system can be built, wherein each main pump may be designed only for the backbone conduit and the connected water consumers, which allows reducing the size and required power of the respective main pump.

According to a second aspect to better understand the present disclosure, an aircraft section is equipped with a water system installed in accordance with the method of the first aspect or one or more of its variants.

The water system installed in the aircraft section, for example, can have a backbone conduit made from a flexible material. As a mere example, the backbone conduit can be a flexible pipe or hose, such as a conduit made from a plastic material. The material can further comprise reinforcement, such as fibre or particle reinforcement integrated into the (plastic) material. This particularly allows rolling the backbone conduit and/or installing the backbone conduit like a wire or cable in the aircraft section. Compared to conventional ducts, such as metallic pipes made from titanium or stainless steel, the pipe or hose according to the present disclosure allows increased flexibility regarding the passageway (path of installation of the backbone conduit), including threading a flexible rod in its final position, which is not possible with a metallic pipe.

In an implementation variant, the water system may comprise only standardised and certified components that are allowed by an aviation association to be mounted in an aircraft. As can be derived from the first aspect, installing the water system requires only a few components, such as a conduit (hose/pipe), fittings/connectors, and eventually brackets. The water system of the aircraft can, hence, the build at any time and can be changed with respect to its water consumer layout and requirements at any time from final assembly to a time where the aircraft is already operating. Thus, repairing and retrofitting is significantly facilitated. Furthermore, there is no need for complex tools and difficult spare parts management or long lead times to provide special parts.

In an implementation variant, the aircraft section can correspond to any portion of the aircraft fuselage that includes at least a part of the passenger cabin as well as the cockpit. Additionally or alternatively, the aircraft section can correspond to a portion of the aircraft fuselage that includes a main water tank of the water system. Such aircraft section can include a water consumer and/or can be mounted (e.g., during final assembly) to another aircraft section comprising at least one water consumer and having a backbone conduit installed therein, according to the first aspect.

For instance, the aircraft section can form a portion of the fuselage of the aircraft that is configured to be mounted to another aircraft section equipped with at least a portion of the water system, and wherein the water system of the aircraft section and the water system of the other aircraft section are configured to be connected via a coupling. As a mere example, one aircraft section can comprise or receive a main water tank and/or the main pump of the water system. Another aircraft section can comprise the standard water consumer or a section therebetween having no water consumer or at least no standard water consumer, but a flexible zone of the passenger cabin, where a customer may want to install a water consumer (at a later time point). By coupling the backbone conduits of each aircraft section, the water system of the aircraft can be installed at the time of connecting the aircraft sections to one another.

In addition, the water system as disclosed herein allows to provide different water network topologies in each aircraft or each type of aircraft. Such network topologies include stub-branch types and star types (direct supply) or combinations thereof.

In another implementation variant, the water system can be a water supply system providing fresh or potable water to the water consumers, e.g., via the main pump.

Alternatively, the water system can likewise be a waste water system or toilet system, wherein the main tank is a waste water tank receiving waste water from the water consumers through the backbone conduit. The main pump, for example, can form part of a vacuum system achieving a vacuum in the backbone conduit to remove waste water from the water consumers.

According to a third aspect to better understand the present disclosure, an aircraft comprises one or more aircraft sections of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a flow diagram illustrating a method for installing a water system in an aircraft section;
- Figure 2: schematically illustrates a plan view of an opened aircraft comprising an exemplary water system;
- Figure 3: schematically illustrates a longitudinal cross-section through an aircraft section comprising an exemplary water system;
- Figure 4: schematically illustrates a transverse cross-section through an aircraft section comprising a backbone conduit;
- Figure 5: schematically illustrates a backbone conduit, to which a branch conduit is supplemented; and
- Figure 6: schematically illustrates aircraft sections equipped with a water system and mounting the aircraft sections to one another.

In the following description, for purposes of explanation and not limitation, specific details are set forth in order to provide a thorough understanding of the present disclosure. It will be apparent to one skilled in the art that the present disclosure may be practiced in other implementations that depart from these specific details.

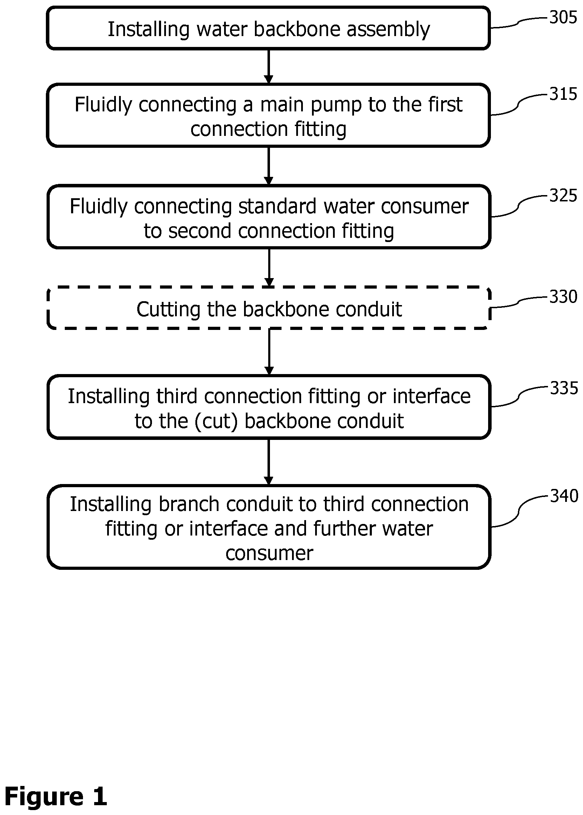

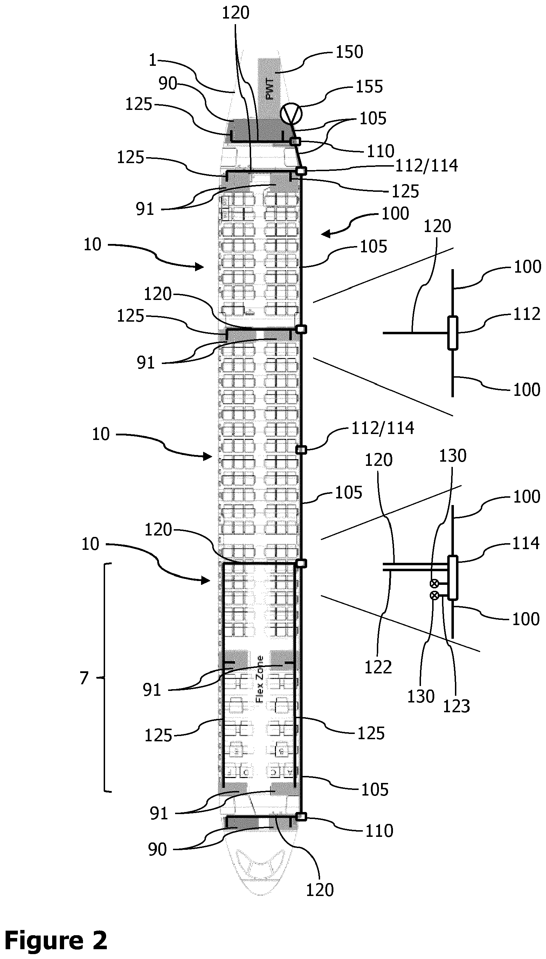

Figure 1 schematically illustrates a flow diagram illustrating a method for installing a water system in an aircraft section. The method is described together with Figure 2 schematically illustrating a plan view of an opened aircraft 1 comprising an already installed exemplary water system.

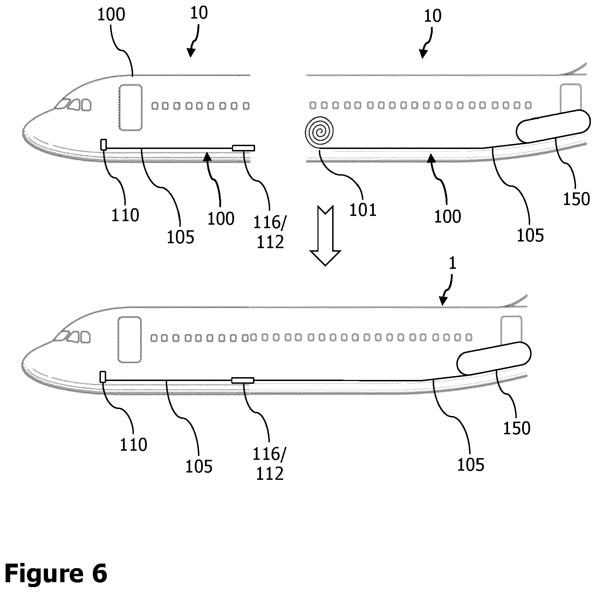

The method begins, in step 305, with installing in an aircraft section 10 a water backbone assembly 100 extending from a first longitudinal end to a second opposite longitudinal end of the aircraft section 10. The water backbone assembly 100 comprises at least a backbone conduit 105, a first connection fitting 110 at the first end of the aircraft section 10 and the second connection fitting 110 at the second end of the aircraft section 10. As can be derived from Figure 2, the aircraft can consist of several aircraft sections 10, each of which extends in a longitudinal direction of the aircraft 1 (from top to bottom of Figure 2). The aircraft 1 can be made from several aircraft sections 10, which will be mounted to one another in a final assembly (which will be explained in more detail with respect to Figure 6). Alternatively, the aircraft 1 can be made from only one aircraft section 10. In any case, an aircraft section 10 is a longitudinally extending portion of the aircraft fuselage configured to form a passenger cabin of the aircraft 1. Figure 2 illustrates a cabin layout comprising seats and monuments, which are arranged throughout the passenger cabin. The backbone conduit 105 extends over the lengths of the aircraft sections 10 or at least a portion thereof. The aircraft section can further include at least a portion of the cockpit, as the cockpit may also include a water consumer, such as a humidifier.

Furthermore, a first longitudinal end of the aircraft 1 can be the front or cockpit side (at the bottom of Figure 2), while a second longitudinal end can be the tail or aft section of the aircraft 1 (at the top of Figure 2). The front and tail sections may not include components of the water system or at least may not include water consumers, so that they may not form an aircraft section in accordance with the present disclosure. On the other hand, as illustrated in Figure 2, the tail section can be employed to install a water tank 150 ("PWT") and/or a main pump 155, which form a source of potable water for the water system. It is to be understood that the water tank 150 can also be arranged anywhere along the aircraft 1, such as at a middle section of the aircraft 1, such as where the wings (not illustrated) are attached to the aircraft fuselage.

Turning back to Figure 1, the method continues with step 315, where a main pump 155 is fluidly connected to the first connection fitting 110. The main pump is configured to convey water from the main tank 150 through the backbone conduit 105.

The tank 150 and pump 155 can likewise form part of a waste water system, wherein the tank 150 collects waste water via the backbone conduit 105. Specifically, the pump 155 then has to be substituted with a vacuum blower and/or a waste pump.

Although Figure 2 illustrates the first connection fitting 110 (near the pump 155) as including a branch 120, it is to be understood that the first connection fitting 110 can likewise be a (straight) coupling or fitting 113 (without a branch), to which the backbone conduit 105 is fluidly connected. Furthermore, it is also possible that the coupling 110 (first connection fitting) forms part of or is integrated into the pump 155, so that the backbone conduit 105 is directly connected to the pump 155. Likewise, the pump 155 can be integrated with or installed in the tank 150.

The method further continues, in step 325, with fluidly connecting a standard water consumer 90 to the second connection fitting 110. Such standard water consumer 90 can be arranged at the very front or very back of the passenger cabin. In the following description reference is made to the standard water consumer 90 arranged adjacent to the cockpit. Thus, the backbone conduit 105 extends over the entire length of the passenger cabin or any aircraft section 10 forming the passenger cabin. The water system, hence, provides a water conduit along the entire length of the aircraft 1.

Figure 2 illustrates two standard water consumers 90 at the cockpit and at the aft of the aircraft 1 (close to the illustrated main water tank 150). Such configuration will provide one standard water consumer 90 at each end of the backbone conduit 105, particularly, if the main water tank 150 and main pump 155 are arranged in a central portion of the aircraft 1. In the illustrated case, where the main tank 150 and the main pump 155 are installed in the aft portion of the aircraft 1, the backbone conduit 105 between the pump 155 and the first connection fitting 110 is rather short, and a further water backbone assembly 100 is installed towards the cockpit portion of the aircraft 1.

While the method of Figure 1 could end and the aircraft 1 could be finally assembled, additional or further water consumers 91 can be connected to the water system. The present disclosure allows installing a basic water system by performing the steps 305 to 325. The present disclosure also allows installing further water consumers 91 at any time, such as during final assembly or at a later time point, even when the aircraft 1 is already in operation.

As a mere example, Figure 2 illustrates standard water consumers 90 in form of corresponding monuments at the front and back end of the passenger cabin. Such standard water consumers 90 can be provided with every aircraft 1, i.e., the standard water consumers 90 are installed during final assembly of the aircraft sections 10 and the aircraft 1.

In addition, Figure 2 illustrates a flexible zone 7 ("Flex Zone"), which allows the operator of the aircraft 1 to change the layout of the passenger cabin including changing the position of further water consumers 91. For example, further water consumers 91 can be added and connected to the water system by providing one or more branch conduits 120, 125 fluidly connected to the backbone conduit 105.

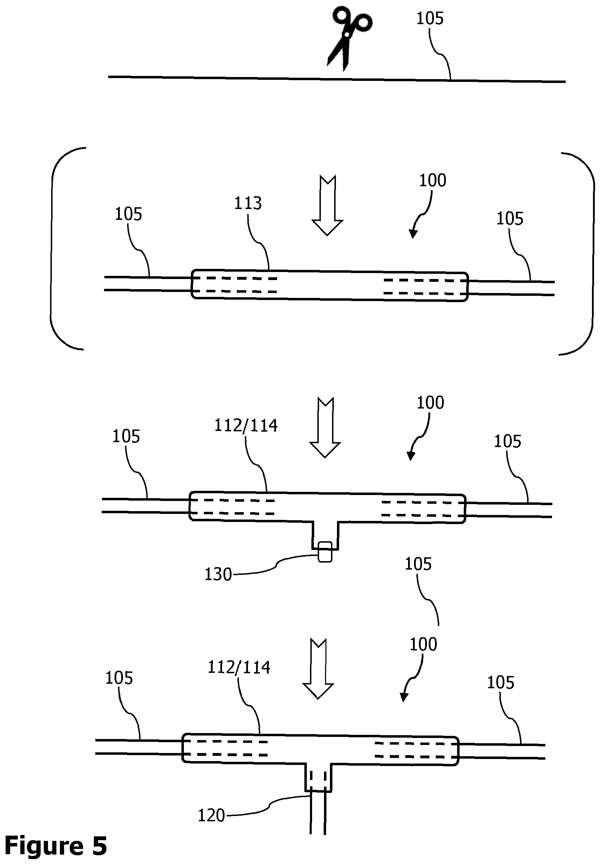

Turning back to the method of Figure 1, in an optional step 330, the method can comprise cutting the backbone conduit 105 at a location in the aircraft section 10 corresponding to a location of a water consumer 91 to be installed. This is illustrated in Figure 5, where a continuous backbone conduit 105 is cut.

Either after the optional step 330 or already during installation of the water system (e.g., before or during final assembly of the aircraft 1) the method can further include, in step 335, installing a third connection fitting 112, 114 to the backbone conduit 105. The third connection fitting 112, 114 can be installed anywhere between the first and second connection fittings 110 as it is also derivable from Figure 2.

The third connection fitting 112, 114 can also be installed at a later time, although the backbone 105 was already cut. In this case, a straight connection fitting 113 (also referred to as a straight fitting) can be installed in the backbone conduit 105. Thus, the straight fitting 113 is removed at a later time point, and can be replaced by the third connection fitting 112, 114, as is derivable from Figure 5.

It is to be understood that the water backbone assembly 100 can be pre-assembled, for example, at a supplier's site, and can be delivered to the final assembly line of the aircraft 1. The same applies to a backbone assembly comprising a backbone conduit 105 and a third connection fitting 112, 114 and/or a first/second connection fitting 110. Such preassembled components can even include branch conduits, which may then be connected to the respective fitting 110, 112, 114 when installing the water backbone assembly 100 into the aircraft section 10.

If the third connection fitting 112, 114 is already installed during or before final assembly of the aircraft 1, but the further water consumer 91 is not yet to be installed, an end of the third connection fitting 112, 114, which forms a branch from the backbone conduit 105, can be closed.

Thus, at a later time the closed third connection fitting 112, 114 can be employed in a further method steps 340, i.e., installing a branch conduit 120 from the third connection fitting 112, 114 to a further water consumer 91 in the aircraft section 10. The water system of the present disclosure can be extended or reduced at any time by providing or removing branch conduits 120.

Again with respect to Figure 2, details of exemplary third connection fittings 112, 114 are also schematically illustrated. The upper drawing shows a third connection fitting in form of a T-fitting 112, which could also be a Y-fitting. While a portion of the fitting 112 provides a passageway for the water streaming through the backbone conduit 105 upstream and downstream of the third connection fitting 112, a branch of the fitting 112 allows connecting a branch conduit 120, 125. As can be derived from the middle part of the aircraft 1, such third connection fitting 112 can also be provided without a connected branch conduit 120, 125 but with a closed end. An alternative solution for providing a future branch conduit 120, 125 and connecting the same to the backbone conduit 105 is the provision of a straight (connection) fitting 113 (Figure 5), so that the backbone conduit 105 is already divided or separated at the respective position. The straight fitting 113 can then be removed and replaced by the third connection fitting 112.

The lower detailed drawing in Figure 2 illustrates a third connection fitting in form of a water consumer interface 114 comprising an inlet, where the upper part of the backbone conduit 105 is connected, and a plurality of outlets. The exemplary illustrated water consumer interface 114 is used to connect two branch conduits 120, 122 thereto (branch conduit 122 not being illustrated in the general drawing of Figure 2). Further outlets 123 are closed by a plug 130. These further outlets 123 can be used at a later time, if additional water consumers 91 are required. At another outlet, the lower portion of the backbone conduit 105 is fluidly connected.

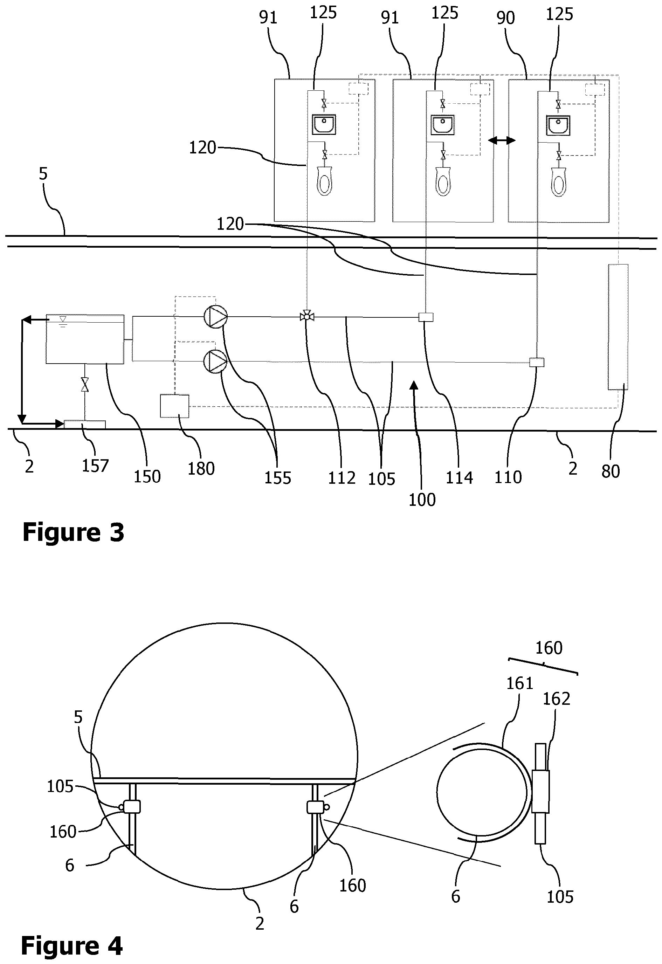

Figure 3 schematically illustrates a longitudinal cross-section through an aircraft section 10 comprising an exemplary water system. Elements which are already explained with respect to Figure 2 and have the same functionality or are the same, are provided with the same reference numerals. The description thereof will be omitted in order to avoid redundant explanations. The aircraft section 10 comprises a water tank 150, which can be filled via an external interface 157 provided at or in an aircraft skin 2. The aircraft section 10 is vertically divided by a floor 5 into an upper passenger cabin and a lower cargo area or other storage/installation area of the aircraft 1.

In the passenger cabin (on top of the floor 5), three exemplary monuments are illustrated and represent water consumers 90, 91. While the monuments are illustrated as lavatories, it is to be understood that one or more of the monuments can likewise be a galley or other water consumer.

In the lower area of the aircraft section 10, the backbone assembly 100 is installed and fluidly connected to a pump 155, and comprises a first connection fitting 110, to which the standard water consumer 90 is connected via a branch conduit 120.

While the further water consumers 91 could likewise be fluidly connected to this backbone 100/105 (as in the illustration of Figure 2), the exemplary water system of Figure 3 includes a second pump 155 and a second backbone conduit 105. As a mere example, although not illustrated in Figure 3, the additional water consumers 91 could also be arranged further away from the standard water consumer 90 (indicated by the double arrow). Thus, the additional water consumers 91 could also be arranged to the left of the tank 150 (left-right direction in Figure 3 corresponds to the longitudinal direction of the aircraft 1). In this case, a second pump 155 and a backbone conduit 105 can be employed for this part of the water system.

In any case, the (in Figure 3 upper) backbone conduit 105 comprises two third connection fittings, i.e., a valve 112 and a coupling or water consumer interface 114. The valve 112 can include a passageway that can be integrated into the backbone conduit 105, and is configured to open and close a branch 120 fluidly connected to the passageway. The passageway is preferably an unhindered fluid connection between the backbone conduit 105 on each side of the valve 112. These components (backbone conduit 105, valve 112, interface 114, or the like) can be preassembled to form the water backbone assembly 100.

It is to be understood that instead of a valve 112 or first connection fitting 110, a water consumer interface 114 could be installed at one or more of the illustrated positions at a backbone conduit 105.

As can be derived from Figure 3, not only the backbone conduit 105 can be provided with a branch conduit 120. Likewise, any conduit, such as branch conduit 120, can further be branched. Thus, additional branches 125 can be installed (see also Figure 2). Similarly, within one monument 90, 91, additional branch conduits 125 can be provided, so that a "last metre" conduit 125 can be installed in order to supply water to each actual water consumer in the monument 90, 91.

Figure 3 additionally illustrates a control unit 180 that is configured to control the operation of the one or more pumps 155. This can be achieved, for example, by receiving a data signal from a data network 80 of the aircraft 1 data signal indicates a water request or water demand. As illustrated in Figure 3 (but not provided with reference signs), each monument 90, 91 also includes controllers connected to the data network 80. Thus, if a water consumer, such as a faucet at a sink or toilet in the monument 90, 91 is activated, a signal can be sent via data network 80 to the control unit 180. Likewise, if a galley insert requests a water demand, or if a buffer level of a buffer tank falls low, a signal can be sent via the data network 80.

Figure 4 schematically illustrates a transverse cross-section through an aircraft section 10 comprising a water backbone assembly 100 installed on each lateral side. The water backbone assembly 100, particularly its backbone conduit 105, is installed by mounting a standard bracket 160 to an aircraft structure of the aircraft section 10. As a mere example, a Z-strut 6 can be arranged underneath the floor 5, which together with the aircraft skin 2 delimit a triangle space. As this space is usually free along the length of the aircraft 1 (or at least over many aircraft sections 10), the backbone conduit 105 can easily be arranged and installed therein to provide water to all aircraft sections 10.

Alternatively, an installation rail (not illustrated), such as a standard seat rail, can be provided anywhere along a longitudinal direction of the aircraft. Such installation rail may also be provided at frames or stringers (not illustrated), i.e. close to the aircraft skin 2. Thus, a standard bracket 160 can also be configured to be mounted to the seat rail, and to receive the backbone conduit 105. The installation rail and/or the standard bracket can be configured to provide a predefined distance between the aircraft skin (or other cold areas) and the backbone conduit 105, in order to avoid freezing of the water in the backbone conduit 105.

Similarly, the backbone conduit 105 can be installed along the floor, below any floor panel, above a bottom edge of the cross beam of the floor, etc.. The present disclosure is not restricted to the illustrated position for installing the backbone conduit 105.

As can be derived from the detailed view in Figure 4, the standard bracket 160 could have a simple structure including a clip 161 or similar part that can be mounted easily and in a fast manner to a structure, such as Z-strut 6. Furthermore, the standard bracket 160 further includes a conduit holder 162. While the conduit holder 162 is illustrated as a ring or cylinder, it could likewise be of an open cross-section, so that the backbone conduit 105 can be clipped thereto.

Figure 5 schematically illustrates a backbone conduit 105, to which a branch conduit 120 is supplemented. As described with respect to Figure 1 and steps 330 to 340, after cutting the backbone conduit 105 at a location optimal for installing the branch conduit 120, a third connection fitting 112, 114 can be connected to the cut ends of the backbone conduit 105. Thus, the third connection fitting 112, 114 connects the cut ends of the backbone conduit 105, while it further provides a branch, to which branch conduit 120 can be fluidly connected. Figure 5 further illustrates an option (in large brackets), where a straight fitting 113 is installed first, that can be replaced by the third connection fitting 112, 114. If required, a plug 130 can be inserted into the branch section of the connection fitting 112, 114, in order to close the branch section until needed.

Likewise, a damaged backbone conduit 105 can be repaired by cutting the backbone conduit 105 at the damaged portion and connecting the cut ends of the backbone conduit 105 with a straight fitting 113, such as the third connection fitting 112/114 without the branch. If the cut out portion is too large to be replaced by the straight fitting 113, two straight fittings 113 and a replacement pipe or hose (conduit) can be used.

Figure 6 schematically illustrates aircraft sections 10 equipped with a water system, for example, a water system installed in accordance with the method of Figure 1. In the upper drawing of Figure 6, the aircraft sections 10 are separated from one another. The right section 10 includes the tank 150 and a water backbone assembly 100, while the left section 10 includes a water backbone conduit 105 and the first connection fitting 110 for a standard water consumer 90 (not illustrated in Figure 6).

The water backbone assembly 100 in the right aircraft section 10 has a length excessing a length of the aircraft section 10, and the excess length (particularly of the backbone conduit 105) is rolled up to form a conduit spiral 101. When both aircraft sections 10 are mounted to one another, the excess length of the water backbone assembly 100 can be used to connect both water backbone assemblies 100 of both sections 10. For instance, the respective backbone conduits 105 can be fluidly connected to one another with a coupling 116 or a first, second or third connection fitting 110, 112, 114.

It is to be understood that the conduit spiral 101, i.e., the rolling up of an excess length of the backbone conduit 105, could also be provided, even when the aircraft 1 is finally assembled (as in the lower drawing of Figure 6). The conduit spiral 101 can be provided at any position along the length of the aircraft 1. Thus, the installed backbone conduit 105 could be extended at a later time, for example, if the backbone conduit 105 is to be extended in the flexible zone 7.

Alternative configurations of providing a water backbone assembly 100 in an aircraft section 10 can comprise fitting the water backbone assembly 100, particularly its backbone conduit 105 to the length. Thus, no cutting is required when two aircraft sections 10 are connected to one another.

A further alternative configuration would be to only slightly excess the length of the water backbone assembly 100 over the lengths of the aircraft section 10. Thus, the water backbone assemblies 100 of both aircraft sections 10, particularly the respective backbone conduits 105 can be directly coupled to one another without cutting. This further allows compensating any length tolerances by sagging of the backbone conduit 105 (hose or pipe) at the intersection of the aircraft sections 10.

Likewise, each of the water backbone assemblies 100 of both aircraft sections can be equipped with a connector (not illustrated) that are configured to be connected to one another. Alternatively, a further piece of backbone conduit 105 (pipe or hose) can be used to connect the two connectors.

A further alternative configuration is to provide a length and angle compensation element (not illustrated) to compensate for manufacturing tolerances. Such length and angle compensation element can be provided at at least one end of the two aircraft sections 10, and can be connected to the water backbone assembly 100 of the other aircraft section 10 in the same manner as described above with respect to one or more connectors.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

As mere examples, the technique presented herein, particularly the installation method, can be employed for installing a potable water system, a waste water system, a vacuum toilet system, an air extraction system, an oxygen provision system, and even for installing wires and cables, such as for electric power or data.

## Claims

1. A method for installing a water system in an aircraft section (10), the aircraft section being a longitudinally extending portion of a fuselage of an aircraft (1), the method comprising:
installing (305), in the aircraft section, a water backbone assembly (100) extending from a first longitudinal end to a second, opposite longitudinal end of the aircraft section, the water backbone assembly (100) comprising at least a backbone conduit (105), a first connection fitting (110) at the first end of the aircraft section (10) and a second connection fitting (110) at the second end of the aircraft section (10);
fluidly connecting (315) a main pump (155) to the first connection fitting (110), the main pump being configured to convey water from a main tank (150) through the backbone conduit (105); and
fluidly connecting (325) a standard water consumer (90) to the second connection fitting (110), the standard water consumer (90) having a predefined location in the aircraft section (10).

2. The method of claim 1, further comprising:
installing (335) a third connection fitting (112, 114) to the backbone conduit (105) anywhere between the first and the second connection fitting (110); and
closing an end (123) of the third connection fitting (112, 114) which forms a branch from the backbone conduit.

3. The method of claim 2, wherein the third connection fitting (112, 114) is a T-fitting (112), and wherein closing the end of the third connection fitting comprises closing the end (123) with a plug (130), or
wherein the third connection fitting (112, 114) comprises a passageway that can be integrated into the backbone conduit (105) and a valve (112) configured to open and close a branch fluidly connected to the passageway.

4. The method of claim 2 or 3, further comprising:
installing (340), in the aircraft section (10), a branch conduit (120, 122, 125) from the third connection fitting (112, 114) to a further water consumer (91) in the aircraft section (10).

5. The method of one of claims 2 to 4, further comprising:
installing (335) a straight connection fitting (113) to the backbone conduit (105) anywhere between the first and the second connection fitting (110); and
removing the straight connection fitting (113) before installing (335) the third connection fitting (112, 114).

6. The method of one of claims 1 to 5, wherein fluidly connecting (325) the standard water consumer comprises extending the backbone conduit (105) to the standard water consumer (90) or installing a standard water consumer conduit from the backbone conduit to the standard water consumer.

7. The method of one of claims 1 to 6, further comprising:
installing (335) a water consumer interface (114) to the backbone conduit (105), wherein the water consumer interface comprises an inlet fluidly connected to the backbone conduit, and a plurality of outlets (123),
wherein, preferably, one of the plurality of outlets (123) is connected to the backbone conduit downstream of the backbone conduit connected to the inlet, and one of the plurality of outlets is configured to be connected to a branch conduit (120, 122, 125).

8. The method of one of claims 1 to 7, wherein installing (305) the water backbone assembly comprises:
installing the backbone conduit (105) with a length corresponding to the aircraft section (10), or
installing the backbone conduit (105) with a length shorter the aircraft section (10), and closing the gap to the backbone conduit (105) in next aircraft (10) with a connecting conduit, or
installing the backbone conduit (105) with a length excessing a length of the aircraft section (10) between the first and second connection fitting (110), wherein the excess length of the backbone conduit is rolled up to a conduit spiral (101).

9. The method of one of claims 1 to 8, wherein installing (305) the water backbone assembly, fluidly connecting (325) the standard water consumer, and/or installing (340) the branch conduit comprises mounting a standard bracket (160) to an aircraft structure (2, 5, 6) of the aircraft section (10), the standard bracket being configured to receive and hold one or more of the backbone conduit (105), the standard water consumer conduit (120) and the branch conduit (120, 122, 125).

10. The method of one of claims 2 to 9, further comprising:
cutting (330) the backbone conduit at a location in the aircraft section corresponding to a location of a water consumer (91) to be installed;
installing (335) a third connection fitting (112) or a water consumer interface (114) to the cut backbone conduit; and
installing (340), in the aircraft section, a branch conduit (120, 122, 125) from the third connection fitting (112) or the water consumer interface (114) to the water consumer (91).

11. An aircraft section (10) equipped with a water system installed in accordance with the method of one of claims 1 to 10.

12. The aircraft section of claim 11, wherein the aircraft section (10) forms a portion of a fuselage of an aircraft (1) which is configured to be mounted to another aircraft section (10) equipped with at least a portion of the water system, and wherein the water system of the aircraft section and the water system of the other aircraft section are configured to be connected via a coupling (116).

13. An aircraft (1) comprising one or more aircraft sections (10) of claim 11 or 12.
